# EUROPEAN PATENT APPLICATION

(11) **EP 4 227 850 A1**
(43) Date of publication of application: **16.08.2023**
(21) Application number: 22206088.1
(22) Date of filing: 08.11.2022
(51) Int. Cl.: G06F 40/284

(54) **PROGRAM, LEARNING METHOD, AND INFORMATION PROCESSING APPARATUS**

(30) Priority: 14.02.2022 JP 2022020114
(71) Applicant: FUJITSU LIMITED, Kawasaki-shi, Kanagawa 211-8588 (JP)
(72) Inventor: DANG, Thang Duy, Kawasaki-shi, Kanagawa, 211-8588 (JP)
(74) Representative: Hoffmann Eitle

(57) **Abstract**

An information processing apparatus deletes specific types of characters from each of multiple sentences and generates multiple word strings which do not include the specific types of characters and correspond to the multiple sentences. The information processing apparatus divides the multiple word strings into multiple groups, each including two or more word strings. The information processing apparatus performs, for each of the multiple groups, padding to equalize the number of words among the two or more word strings based on the maximum number of words in the two or more word strings. The information processing apparatus updates, using each of the multiple padded groups, parameter values included in a natural language processing model that calculates an estimate value from a word string input thereto.

## Description

### FIELD

The embodiments discussed herein relate to a program, learning method, and information processing apparatus.

### BACKGROUND

Information processing apparatuses are sometimes used to perform natural language processing tasks, such as named entity recognition, machine translation, and sentiment analyses, using natural language processing models. The natural language processing models may be machine learning models generated from training data by machine learning. Such machine learning models may be neural networks.

A system has been proposed that extracts, from text data, features to be input to a machine learning model through normalization, stemming, lemmatization, and tokenization. In addition, a language processing apparatus has been proposed that divides long text into short text segments of a certain size and calculates a short-term feature that represents short-term context from each short text segment using a machine learning model.

See, for example, U.S. Patent Application Publication No. 2020/0302540 and International Publication Pamphlet No. WO2021/181719.

There are known information processing apparatuses that, in machine learning of a natural language processing model, divide training data containing multiple sentences into mini-batches, and repeat updating parameter values of the natural language processing model once for one mini-batch. Each mini-batch may contain two or more sentences.

Note however that, it is sometimes the case that two or more sentences included in the same mini-batch need to have the same length due to parameter calculation constraints. In this case, the information processing apparatuses perform padding to add pads, each representing a blank space, to shorter sentences in such a manner that sentences share the same length at least in the same mini-batch. However, directly padding sentences including miscellaneous characters may undesirably increase the data sizes of the after-padded mini-batches. This may increase the computational complexity of machine learning and, therefore, the learning time.

### SUMMARY

One aspect of the embodiments is to shorten the learning time of a natural language processing model.

According to an aspect, there is provided a computer program that causes a computer to execute a process including deleting specific types of characters from each of a plurality of sentences and generating a plurality of word strings which does not include the specific types of characters and corresponds to the plurality of sentences; dividing the plurality of word strings into a plurality of groups, each of which includes two or more word strings; performing, for each of the plurality of groups, padding to equalize a number of words among the two or more word strings based on a maximum number of words in the two or more word strings; and updating, using each of the plurality of padded groups, parameter values included in a natural language processing model that calculates an estimate value from a word string input thereto.

### BRIEF DESCRIPTION OF DRAWINGS

FIG. 1 illustrates an information processor according to a first embodiment;
FIG. 2 is a block diagram illustrating an example of hardware of an information processor;
FIG. 3 illustrates an example of a document including multiple sentences;
FIGS. 4A to 4C illustrate examples of padding methods;
FIG. 5 illustrates an example of an unwanted character table;
FIG. 6 illustrates an example of preprocessing for a document;
FIG. 7 illustrates an example of a natural language processing model;
FIG. 8 illustrates an example of a feature matrix corresponding to one token string;
FIG. 9 illustrates an example of learning time and accuracy measurements;
FIG. 10 is a block diagram illustrating an example of functions of the information processor;
FIG. 11 is a flowchart illustrating an example of a model generation procedure; and
FIG. 12 is a flowchart illustrating an example of a model testing procedure.

### DESCRIPTION OF EMBODIMENTS

Several embodiments will be described below with reference to the accompanying drawings.

### (a) First Embodiment

A first embodiment is described hereinafter.

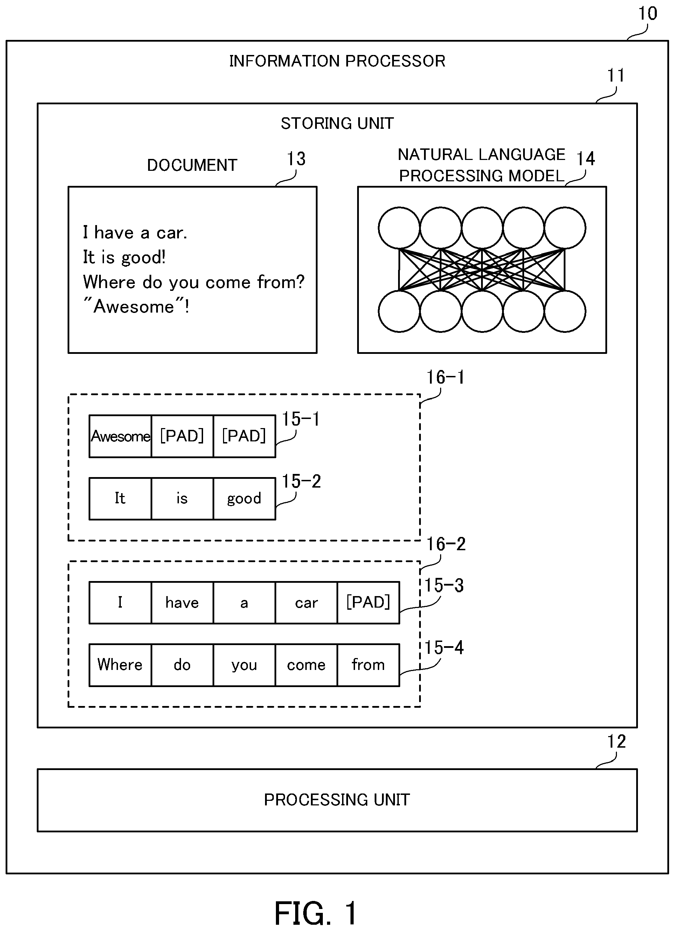

FIG. 1 illustrates an information processor according to the first embodiment.

An information processor 10 builds a natural language processing model by machine learning. The information processor 10 may be a client device or server device. The information processor 10 may be referred to, for example, as a computer, machine learning device, or natural language processor.

The information processor 10 includes a storing unit 11 and a processing unit 12. The storing unit 11 may be volatile semiconductor memory, such as random access memory (RAM), or a non-volatile storage device, such as a hard disk drive (HDD) or flash memory. The processing unit 12 is, for example, a processor, such as a central processing unit (CPU), graphics processing unit (GPU), or digital signal processor (DSP). Note however that the processing unit 12 may include an electronic circuit, such as an application specific integrated circuit (ASIC) or field programmable gate array (FPGA). The processor executes programs stored in memory, such as RAM (or in the storing unit 11). The term "multiprocessor", or simply "processor", may be used to refer to a set of multiple processors.

The storing unit 11 stores therein a document 13 and a natural language processing model 14.

The document 13 includes multiple sentences written in a natural language, such as English and Japanese. Each sentence includes multiple words. The sentences may contain phonetic letters, such as Latin and Kana characters. In addition, the sentences may contain symbols that do not directly correspond to pronunciations. Such symbols may include punctuation marks and non-letter characters, such as question marks, exclamation marks, and quotation marks. The symbols may also include markup tags used in markup languages, such as HyperText Markup Language (HTML) and Extensible Markup Language (XML).

The document 13 may be given teacher labels indicating correct answers for natural language processing tasks. Such a teacher label may be assigned to a word, a sentence, or a combination of a certain number of sentences (e.g., a pair of sentences). The teacher labels may be sentences converted from other sentences, such as translated sentences. The teacher labels may individually indicate a class to which a word, a sentence, or a combination of sentences belongs.

The natural language processing model 14 is a machine learning model that is capable of being used for natural language processing tasks, such as named entity recognition, machine translation, and sentiment analyses. The natural language processing model 14 receives a word string and outputs estimation results corresponding to the received word string (e.g., a class to which the received word string belongs). The natural language processing model 14 may be a neural network. The natural language processing model 14 may include neural networks called Transformers, or may be a neural network called Bidirectional Encoder Representations from Transformers (BERT).

The natural language processing model 14 may include a self-attention layer. The self-attention layer calculates, based on the feature of a word of interest in a word string and the feature of each of other words therein, an attention weight indicating the degree of importance of each other word for the word of interest. The self-attention layer updates the feature of the word of interest using the attention weight and the feature of each of the other words. In order to update the feature of each word, the self-attention layer refers to the features of all other words. Therefore, the self-attention layer internally generates a feature matrix, the size of which corresponds to the number of words in the word string. Note however that, because parameter values of the self-attention layer act on a word-by-word basis, they depend on the number of dimensions of the features but do not depend on the number of words.

Machine learning that iteratively updates the parameter values of the self-attention layer may use a mini-batch including multiple word strings for each iteration. For example, one iteration calculates the average error of multiple estimation results corresponding to multiple word strings included in a mini-batch, and updates the parameter values once based on the average error. In general, for the convenience of error calculation and parameter calculation, the number of words in multiple word strings is adjusted to be the same within the same mini-batch. On the other hand, due to the nature of the parameter values of the self-attention layer, the number of words in word strings may differ among different mini-batches. Note that the natural language processing model 14 simply needs to be able to change the number of words for each iteration, and does not need to include a self-attention layer.

The processing unit 12 uses the document 13 to run machine learning that iteratively updates the parameter values of the natural language processing model 14. At this time, the processing unit 12 preprocesses the document 13. The processing unit 12 deletes specific types of characters from each of multiple sentences included in the document 13. The specific types of characters are unwanted characters that contribute little to the accuracy of natural language processing tasks performed by the natural language processing model 14. The specific types of characters may include some or all of punctuation marks, non-letter characters, and markup tags. Deletion of the specific types of characters may be called regularization.

By deleting the specific types of characters, the processing unit 12 generates multiple word strings that do not include the specific types of characters and correspond to the multiple sentences included in the document 13. The processing unit 12 generates word strings by dividing each sentence into words. The number of words may vary among word strings. The words are sometimes called tokens. Such tokens may denote subwords further segmented than linguistic words. The words may be represented by identification numbers, such as token IDs. One word string may be generated from one sentence or a specific number of sentences, depending on the natural language processing task to be performed.

Note that either deletion of the specific types of characters or division of each sentence into words may be performed first. For example, the processing unit 12 generates word strings 15-1, 15-2, 15-3, and 15-4 corresponding to four sentences included in the document 13. The period, exclamation marks, question mark, and quotation marks are deleted from the word strings 15-1, 15-2, 15-3, and 15-4.

The processing unit 12 divides multiple word strings into multiple groups each including two or more word strings. A group may be called mini-batch or simply batch. For example, the processing unit 12 divides multiple word strings by a certain number of word strings in order from the top, to thereby generate multiple groups each including the certain number of word strings. Alternatively, for example, the processing unit 12 sorts multiple word strings according to the number of words (for example, in ascending order of the number of words), and divides the sorted word strings by a certain number of word strings in order from the top, to thereby generate multiple groups each including the certain number of word strings. The processing unit 12 generates, for instance, a group 16-1 including the word strings 15-1 and 15-2 and a group 16-2 including the word strings 15-3 and 15-4.

For each of the multiple groups, the processing unit 12 performs padding to equalize the number of words among the two or more word strings included in the group, based on the maximum number of words among those word strings. For example, the processing unit 12 determines the maximum number of words among the two or more word strings included in the group. Then, the processing unit 12 adds one or more pads, each representing a dummy word, to the end of each word string whose number of words is less than the maximum number of words, to thereby adjust the number of words of the word string to the maximum number of words.

As for the group 16-1, for example, the word string 15-1 has one word and the word string 15-2 has three words. Therefore, the processing unit 12 adds two pads to the end of the word string 15-1 to equalize the number of words between the word strings 15-1 and 15-2 to three. Also, as for the group 16-2, the word string 15-3 has 4 words and the word string 15-4 has 5 words. Therefore, the processing unit 12 adds one pad to the end of the word string 15-3 to equalize the number of words between the word strings 15-3 and 15-4 to five.

The processing unit 12 runs machine learning to update the parameter values included in the natural language processing model 14, using each of the multiple after-padded groups. For example, the processing unit 12 generates, from the group 16-1, a feature matrix with a size corresponding to the number of words equal to 3, and updates the parameter values by calculating the average error of the estimation results of the natural language processing model 14. Further, the processing unit 12 generates, from the group 16-2, a feature matrix with a size corresponding to the number of words equal to 5, and updates the parameter values by calculating the average error of the estimation results of the natural language processing model 14. In this manner, the processing unit 12 updates the parameter values once for each group.

As described above, the information processor 10 according to the first embodiment divides multiple word strings generated from the document 13 into multiple groups, then performs padding to equalize the number of words among word strings for each group, and updates the parameter values of the natural language processing model 14 for each group. The information processor 10 removes specific types of characters from sentences before padding for each group.

Herewith, the data size of each group of word strings used in machine learning is reduced. Also, when specific types of characters are removed from one word string, the number of pads added to other word strings in the same group may decrease, thus reducing unwanted pads from the after-padded group of word strings. It also reduces the risk of some word strings being significantly long due to including specific types of characters, which in turn reduces the risk of generating groups with a considerably large number of pads. Hence, the sizes of feature matrices generated for the natural language processing model 14 decrease, and the load of processes during machine learning, such as error calculation and parameter calculation, is therefore lightened, which results in a reduced learning time of machine learning.

In addition, deletion of words, such as punctuation marks, non-letter characters, markup tags, and pads, that contribute less to the estimation results of the natural language processing model 14, prevents a decrease in the accuracy of the natural language processing model 14. Note that the information processor 10 is able to reduce an even greater number of pads by sorting multiple word strings and forming each group with word strings having similar numbers of words.

### (b) Second Embodiment

A second embodiment is described hereinafter.

An information processor 100 according to the second embodiment builds a natural language processing model by machine learning. The information processor 100 may be a client device or server device. The information processor 100 may be referred to as a computer, machine learning device, or natural language processor. The information processor 100 corresponds to the information processor 10 of the first embodiment.

Examples of natural language processing tasks include named entity recognition, machine translation, sentiment analyses, and recommendation systems. Natural language processing tasks using a trained natural language processing model may be performed on an on-premise system, run in a data center, or made available as a cloud service. The generation and use of the natural language processing model may be managed by the same information processor, or may be separately managed by different information processors.

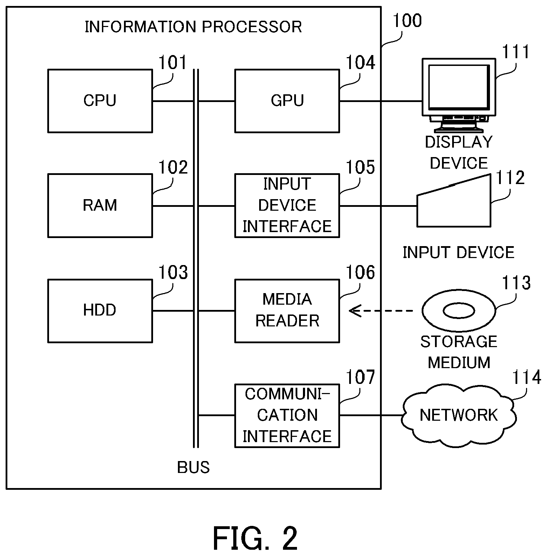

FIG. 2 is a block diagram illustrating an example of hardware of an information processor.

The information processor 100 includes a CPU 101, a RAM 102, an HDD 103, a GPU 104, an input device interface 105, a media reader 106, and a communication interface 107, which are individually connected to a bus. The CPU 101 corresponds to the processing unit 12 of the first embodiment. The RAM 102 or the HDD 103 corresponds to the storing unit 11 of the first embodiment.

The CPU 101 is a processor configured to execute program instructions. The CPU 101 reads out at least part of programs and data stored in the HDD 103, loads them into the RAM 102, and executes the loaded programs. Note that the information processor 100 may include two or more processors. The term "multiprocessor", or simply "processor", may be used to refer to a set of processors.

The RAM 102 is volatile semiconductor memory for temporarily storing therein programs to be executed by the CPU 101 and data to be used by the CPU 101 for its computation. The information processor 100 may be provided with a different type of volatile memory other than RAM.

The HDD 103 is a non-volatile storage device to store therein software programs, such as an operating system (OS), middleware, and application software, and various types of data. The information processor 100 may be provided with a different type of non-volatile storage device, such as flash memory or a solid state drive (SSD).

The GPU 104 performs image processing in cooperation with the CPU 101, and displays video images on a screen of a display device 111 coupled to the information processor 100. The display device 111 may be a cathode ray tube (CRT) display, a liquid crystal display (LCD), an organic electro-luminescence (OEL) display, or a projector. An output device, such as a printer, other than the display device 111 may be connected to the information processor 100.

In addition, the GPU 104 may be used as a general-purpose computing on graphics processing unit (GPGPU). The GPU 104 may execute a program according to an instruction from the CPU 101. This program may be a machine learning program for building a model. The information processor 100 may have volatile semiconductor memory other than the RAM 102 as GPU memory used by the GPU 104.

The input device interface 105 receives an input signal from an input device 112 connected to the information processor 100. Various types of input devices may be used as the input device 112, for example, a mouse, a touch panel, or a keyboard. Multiple types of input devices may be connected to the information processor 100.

The media reader 106 is a device for reading programs and data recorded on a storage medium 113. The storage medium 113 may be, for example, a magnetic disk, an optical disk, or semiconductor memory. Examples of the magnetic disk include a flexible disk (FD) and HDD. Examples of the optical disk include a compact disc (CD) and digital versatile disc (DVD). The media reader 106 copies the programs and data read out from the storage medium 113 to a different storage medium, for example, the RAM 102 or the HDD 103. The read programs may be executed by the CPU 101.

The storage medium 113 may be a portable storage medium and used to distribute the programs and data. In addition, the storage medium 113 and the HDD 103 may be referred to as computer-readable storage media.

The communication interface 107 communicates with different information processors via a network 114. The communication interface 107 may be a wired communication interface connected to a wired communication device, such as a switch or router, or may be a wireless communication interface connected to a wireless communication device, such as a base station or access point.

Next described is training data used for machine learning to build a natural language processing model. The natural language processing model of the second embodiment is a class classifier that receives a token string representing one or two sentences and determines the class to which the token string belongs. For example, the natural language processing model classifies one sentence represented by the token string into one of two classes. Alternatively, for example, the natural language processing model estimates the relationship between two sentences represented by the token string.

The natural language processing model of the second embodiment is a neural network with parameter values optimized by machine learning. The machine learning involves iterations for iteratively updating the parameter values. In each iteration, each of multiple token strings included in one mini-batch (sometimes simply called "batch") of the training data is input to the natural language processing model to calculate the average error of the outputs of the natural language processing model. Each iteration updates the parameter values once by error backward propagation based on the average error.

The parameter values of the natural language processing model act on a token-by-token basis. For example, the natural language processing model has a coefficient matrix whose size corresponds to the number of dimensions of feature vectors per token. Therefore, the natural language processing model is able to receive token strings with different numbers of tokens (token strings of different lengths). Note however that token strings in the same mini-batch need to be the same length during machine learning because of error calculation and parameter calculation performed on a per-mini-batch basis. Therefore, in generating training data, it is sometimes the case that padding is performed to add pads, each representing a dummy token, to the ends of token strings.

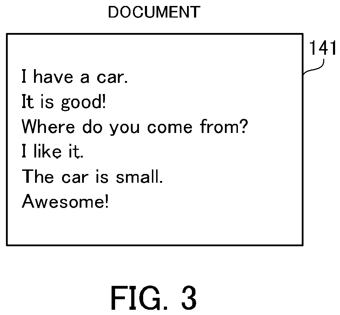

FIG. 3 illustrates an example of a document including multiple sentences.

A document 141 is a training data document used for machine learning of a natural language processing model. The document 141 includes multiple sentences written in natural language. Depending on a natural language processing task to be implemented, a teacher label indicating a correct class is added to each sentence or each pair of sentences. In the example of FIG. 3, the document 141 contains six sentences written in English.

The first sentence includes four words represented by letters of the alphabet and one period. The second sentence contains three words represented by alphabetical letters and one exclamation mark. The third sentence contains five words represented by alphabetical letters and one question mark. The fourth sentence contains three words represented by alphabetical letters and one period. The fifth sentence contains four words represented by alphabetical letters and one period. The sixth sentence contains one word represented by alphabetical letters and one exclamation mark.

The information processor 100 divides the sentences included in the document 141 into tokens. In principle, one token corresponds to one word. However, infrequently occurring words may be divided into subwords which are frequently occurring substrings, and one token may indicate one subword. Also, punctuation marks, non-letter characters, such as exclamation marks, question marks, and quotation marks, and markup tags are treated as single tokens. Each token may be represented by a token ID, which is an identification number for identifying a word, in place of the letter string.

When the six sentences included in the document 141 are directly divided into tokens, the first sentence is converted into a token string with a length of 5. The second sentence is converted into a token string with a length of 4. The third sentence is converted into a token string with a length of 6. The fourth sentence is converted into a token string with a length of 4. The fifth sentence is converted into a token string with a length of 5. The sixth sentence is converted into a token string with a length of 2.

The information processor 100 divides the multiple token strings into mini-batches and also performs padding in such a manner that, at least within the same mini-batch, the token strings share the same length. Each pad representing a dummy token is denoted by a token ID of 0, for example. Examples of padding methods include fixed padding, dynamic padding, and uniform padding, which are described below.

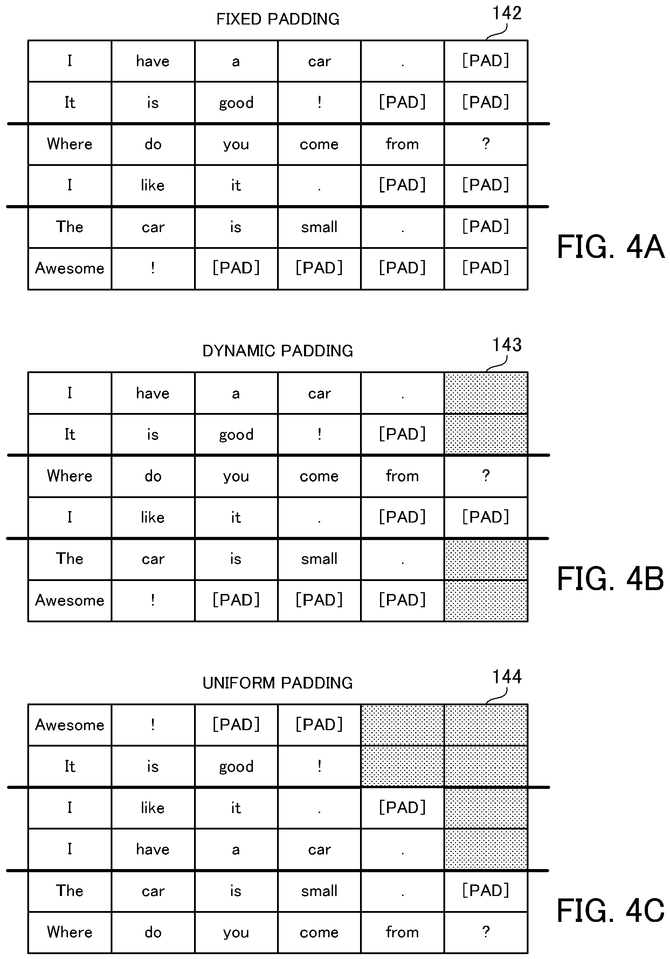

FIGS. 4A to 4C illustrate examples of padding methods.

Assume here that the mini-batch size, which is the number of token strings included in one mini-batch, is set to two. Therefore, three mini-batches with a size of 2 are generated from the document 141.

A table 142 of FIG. 4A represents mini-batches generated from the document 141 by fixed padding. The fixed padding generates multiple mini-batches by dividing the multiple token strings by the mini-batch size in order from the top according to the order of appearance in the document 141. In addition, the fixed padding determines the maximum length among all token strings and adds pads to the ends of token strings so that the length of each of all the token strings matches the maximum length.

As illustrated in FIG. 4A, the third token string with a length of 6 has the maximum length. Therefore, according to the fixed padding, one pad is added to the first token string; two pads are added to the second token string; two pads are added to the fourth token string; one pad is added to the fifth token string; and four pads are added to the sixth token string. As a result, the table 142 contains 2 × 6 × 3 = 36 tokens, of which 10 tokens are pads.

A table 143 of FIG. 4B represents mini-batches generated from the document 141 by dynamic padding. The dynamic padding generates multiple mini-batches by dividing the multiple token strings by the mini-batch size in order from the top according to the order of appearance in the document 141. In addition, the dynamic padding determines, for each mini-batch, the maximum length among the token strings and adds pads to the ends of token strings so that the length of each of all the token strings in the same mini-batch matches the maximum length.

As illustrated in FIG. 4B, the first mini-batch has a maximum length of 5. According to the dynamic padding, therefore, one pad is added to the second token string. The second mini-batch has a maximum length of 6. Therefore, two pads are added to the fourth token string. The third mini-batch has a maximum length of 5. Therefore, three pads are added to the sixth token string. As a result, the table 143 contains 2 × 5 + 2 × 6 + 2 × 5 = 32 tokens, of which 6 tokens are pads.

A table 144 of FIG. 4C represents mini-batches generated from the document 141 by uniform padding. The uniform padding generates multiple mini-batches by sorting the multiple token strings in ascending order of the number of tokens and divides the sorted multiple token strings by the mini-batch size in order from the top. In addition, the uniform padding determines, for each mini-batch, the maximum length among the token strings and adds pads to the ends of token strings so that the length of each of all the token strings in the same mini-batch matches the maximum length.

As illustrated in FIG. 4C, the lengths of the two token strings included in the first mini-batch are 2 and 4. According to the uniform padding, therefore, two pads are added to the shorter one of the token strings of the first mini-batch. The lengths of the two token strings included in the second mini-batch are 4 and 5. Therefore, one pad is added to the shorter one of the token strings of the second mini-batch. The lengths of the two token strings included in the third mini-batch are 5 and 6. Therefore, one pad is added to the shorter one of the token strings of the third mini-batch. As a result, the table 144 contains 2 × 4 + 2 × 5 + 2 × 6 = 30 tokens, of which 4 tokens are pads.

Thus, the uniform padding provides greater data size reduction of mini-batches than the fixed padding. Note however that the mini-batches generated by the above-mentioned methods contain symbols, such as punctuation marks, non-letter characters, and markup tags. In this regard, the natural language processing model of the second embodiment includes a self-attention layer (to be described later), which often calculates small attention weights for those symbols. Therefore, the symbols may be interpreted as unwanted characters that contribute little to the output of the natural language processing model.

In addition, since the symbols are also converted into tokens, the presence of the symbols may increase the number of pads added to other token strings in the same mini-batch, thus further increasing the number of useless tokens. Also, token strings containing the above symbols may become significantly long, and inclusion of such long token strings in part may result in generating mini-batches containing a lot of pads.

If the data sizes of the after-padded mini-batches are large, the feature matrices generated by the natural language processing model become large, which increases the load of processes during machine learning, such as error calculation and parameter calculation. This may lengthen the learning time of machine learning. In view of this problem, the information processor 100 performs regularization to delete unwanted characters before padding, thereby generating small data-sized mini-batches with fewer useless tokens.

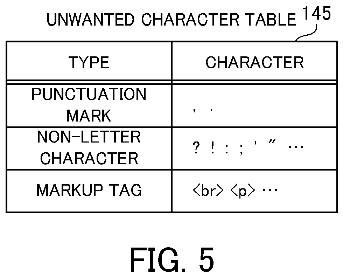

FIG. 5 illustrates an example of an unwanted character table.

The information processor 100 stores an unwanted character table 145. The unwanted character table 145 defines unwanted characters to be deleted from sentences before padding. The unwanted characters include punctuation marks, non-letter characters, and markup tags. The punctuation marks include commas (,) and periods (.). The non-letter characters include question marks (?), exclamation marks (!), colons (:), semicolons (;), single quotation marks ('), and double quotation marks ("). The markup tags include various tags defined in markup languages, such as line break tags (<br>) and paragraph tags (<p>) defined in HTML.

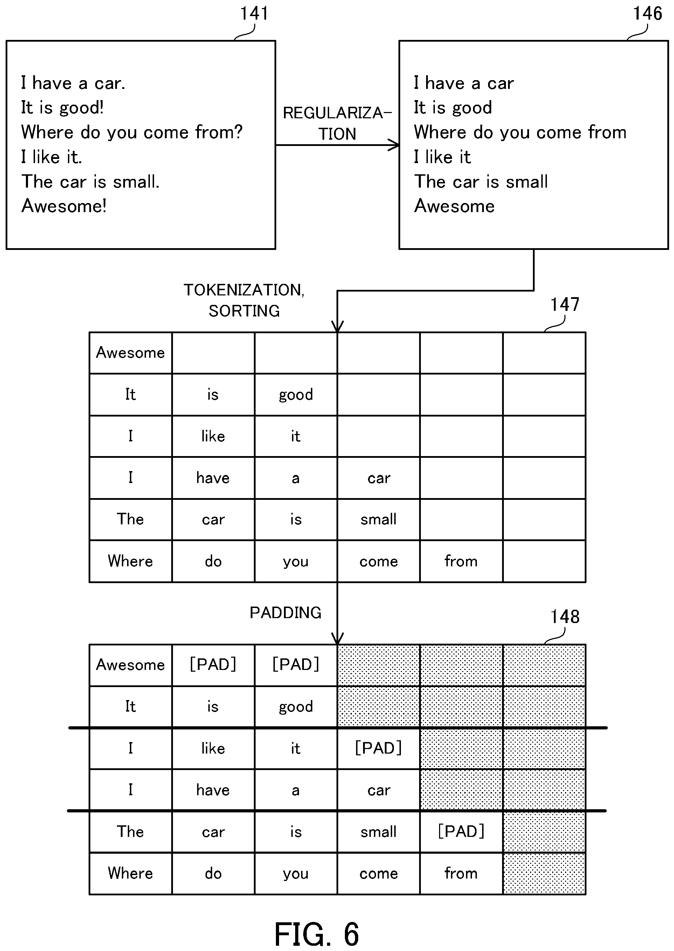

FIG. 6 illustrates an example of preprocessing for a document.

The information processor 100 performs regularization to remove unwanted characters from the document 141, to thereby convert the document 141 into a document 146. Regular expressions may be used for the regularization. In the example of FIG. 6, the information processor 100 deletes the periods from the first, fourth and fifth sentences; deletes the exclamation marks from the second and sixth sentences; and deletes the question mark from the third sentence. As a result, the number of words in the first sentence is 4; the number of words in the second sentence is 3; the number of words in the third sentence is 5; the number of words in the fourth sentence is 3; the number of words in the fifth sentence is 4; and the number of words in the sixth sentence is 1.

The information processor 100 divides each of the multiple sentences included in the document 146 into tokens to generate multiple token strings. Note however that either the regularization or the tokenization may be performed first, or the regularization and the tokenization may be performed integrally. Assume here that one token string is generated from one sentence. In that case, the following token strings are generated: a first token string with a length of 4; a second token string with a length of 3; a third token string with a length of 5; a fourth token string with a length of 3; a fifth token string with a length of 4; and a sixth token string with a length of 1.

The information processor 100 sorts the multiple token strings in ascending order of the number of tokens. A table 147 represents multiple token strings after sorting. The information processor 100 divides the multiple token strings into multiple mini-batches by sequentially selecting a predetermined number of token strings (two in this case) from the top of the table 147. Then, the information processor 100 determines, for each mini-batch, the maximum length among the token strings, and performs padding to add pads to the end of each token string whose length is less than the maximum length. A table 148 represents multiple after-padded mini-batches.

According to the example of FIG. 6, the information processor 100 adds two pads to the shorter one of the token strings of the first mini-batch, to equalize the lengths of the token strings of the first mini-batch to three. Similarly, the information processor 100 adds one pad to the shorter one of the token strings of the second mini-batch, to equalize the lengths of the token strings of the second mini-batch to four. Further, the information processor 100 adds one pad to the shorter one of the token strings of the third mini-batch, to equalize the lengths of the token strings of the third mini-batch to five. Thus, the table 148 contains 2 × 3 + 2 × 4 + 2 × 5 = 24 tokens, of which 4 tokens are pads.

Next described is the structure of the natural language processing model according to the second embodiment.

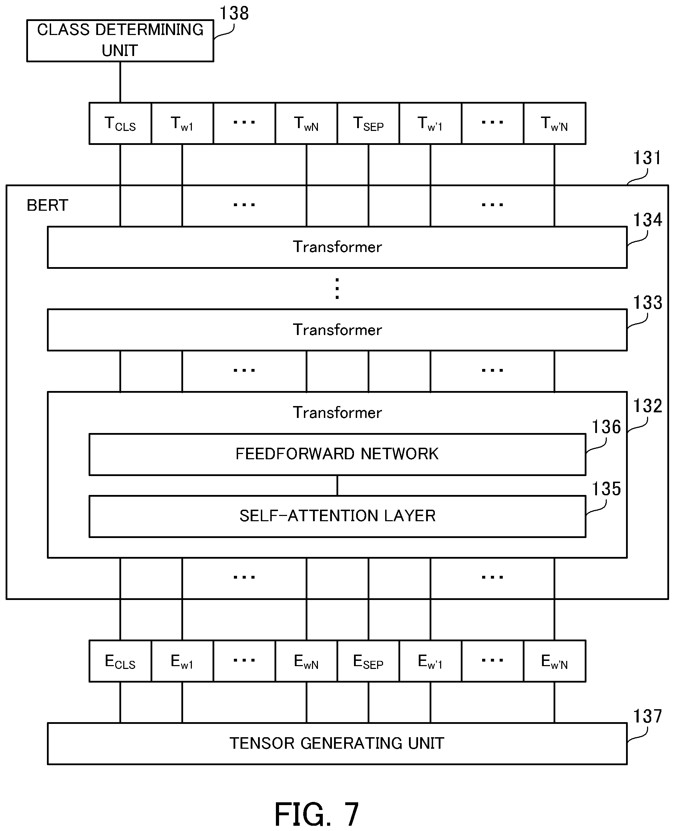

FIG. 7 illustrates an example of the natural language processing model.

Assume here that the natural language processing model performs a natural language processing task of determining a class indicating a relationship between two sentences from a token string representing the two sentences. The natural language processing model includes a BERT 131, a tensor generating unit 137, and a class determining unit 138. The BERT 131 includes multiple transformers, such as transformers 132, 133, and 134, connected in series. The transformer 132 includes a self-attention layer 135 and a feedforward network 136.

The tensor generating unit 137 receives a mini-batch and converts the mini-batch into an input tensor to be input to the BERT 131. One token string includes two partial token strings corresponding to two sentences. A control token indicating "class" is inserted at the beginning of the token string. At the boundary between the two sentences, a control token indicating "separator" is inserted.

The tensor generating unit 137 converts tokens included in the mini-batch into token vectors, which are distributed representations. The size of a token vector is, for example, 512 dimensions. In addition, the tensor generating unit 137 assigns, to each token, a segment identifier for distinguishing to which one of the sentences within the same token string the token belongs, and converts the segment identifiers into segment vectors, which are distributed representations. Further, the tensor generating unit 137 assigns, to each token, a position identifier for identifying the position of the token in the sequence of multiple tokens within the same token string, and converts the position identifiers into position vectors, which are distributed representations. The tensor generating unit 137 connects, for each token, the token vector, the segment vector, and the position vector to generate a feature vector.

Herewith, the tensor generating unit 137 generates an input tensor representing a set of feature vectors corresponding to a set of tokens included in the mini-batch. The size of one feature vector is, for example, 768 dimensions. The mini-batch size, which is the number of token strings included in a mini-batch, is 256, for example. The size of the input tensor is calculated as the mini-batch size multiplied by the token string length and the number of dimensions of the feature vectors.

Each of the multiple transformers receives a tensor whose size is obtained as the mini-batch size multiplied by the token string length and the number of dimensions of the feature vectors, and converts it into another tensor of the same size. A tensor output from one transformer is input to a transformer of the next stage. The transformers are deployed, for example, in 12 stages.

The self-attention layer 135 selects each token included in the mini-batch as a token of interest, and updates the feature vector of the token of interest by the following processing. The self-attention layer 135 converts the feature vector of the token of interest into a feature vector called "query" using a query coefficient matrix. In addition, the self-attention layer 135 converts the feature vector of each token included in the token string that includes the token of interest into a feature vector called "key" using a key coefficient matrix and also into a feature vector called "value" using a value coefficient matrix.

The self-attention layer 135 computes the inner product of the query and the key of each of the multiple tokens, thereby calculating an attention weight indicating the importance of each token for the token of interest. The self-attention layer 135 calculates the weighted average of the values of the multiple tokens using the calculated attention weights, and obtains a converted feature vector of the token of interest using the weighted average and a context coefficient matrix. The aforementioned various coefficient matrices are sets of parameter values that are optimized through machine learning. The sizes of the coefficient matrices depend on the number of dimensions of the feature vector per token, but does not depend on the token string length.

The feedforward network 136 is a forward propagating neural network with no cycles. The feedforward network 136 converts, for each token, the feature vector received from the self-attention layer 135 into a feature vector of the same size using a coefficient matrix. This coefficient matrix is a set of parameter values optimized through machine learning, and the size of the coefficient matrix depends on the number of dimensions of the feature vector but does not depend on the token string length.

The class determining unit 138 extracts, for each token string, the feature vector of a class token, which is a control token at the head, from an output tensor output from the BERT 131. The class determining unit 138 determines, for each token string, the class to which the token string belongs from the feature vector of the class token. For example, the class determining unit 138 performs binary classification to determine whether two sentences represented by the token string have a specific relationship.

In machine learning, the information processor 100 compares the class label output from the class determining unit 138 and the teacher label included in the training data to calculate an error. The information processor 100 updates the parameter values of the BERT 131, including the aforementioned various coefficient matrices, in such a manner as to minimize the average error of the multiple token strings included in the mini-batch.

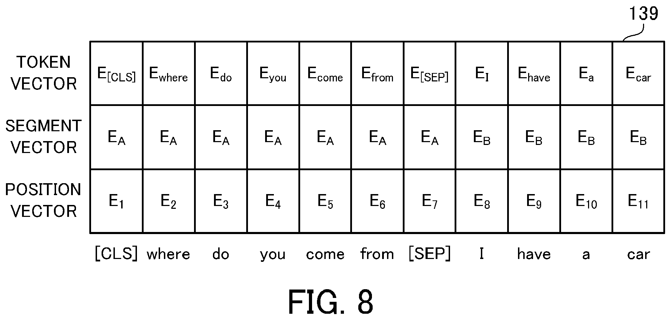

FIG. 8 illustrates an example of a feature matrix corresponding to one token string.

A feature matrix 139 is a set of feature vectors corresponding to one token string. The first token is a control token that indicates "class". The second to sixth tokens are those indicating the words of the first sentence. The seventh token is a control token that indicates "separator". The eighth to eleventh tokens are those indicating the words of the second sentence.

The token ID of each of the 11 tokens is converted into a token vector, which is a distributed representation. A segment identifier indicating the first sentence is assigned to each of the first to seventh tokens, and a segment identifier indicating the second sentence is assigned to each of the eighth to eleventh tokens. These segment identifiers are converted into segment vectors, which are distributed representations. The first token is given a position identifier indicating the first position, the second token is given a position identifier indicating the second position, and the third to eleventh tokens are individually given corresponding position identifiers. These position identifiers are converted into position vectors, which are distributed representations.

The feature vector of each of the 11 tokens is the concatenation of the token vector, the segment vector, and the position vector. The feature matrix 139 includes 11 feature vectors. By removing unwanted characters before padding, the size of the feature matrix 139 is reduced. This reduces the amount of calculation of the BERT 131, which in turn shortens the learning time of machine learning.

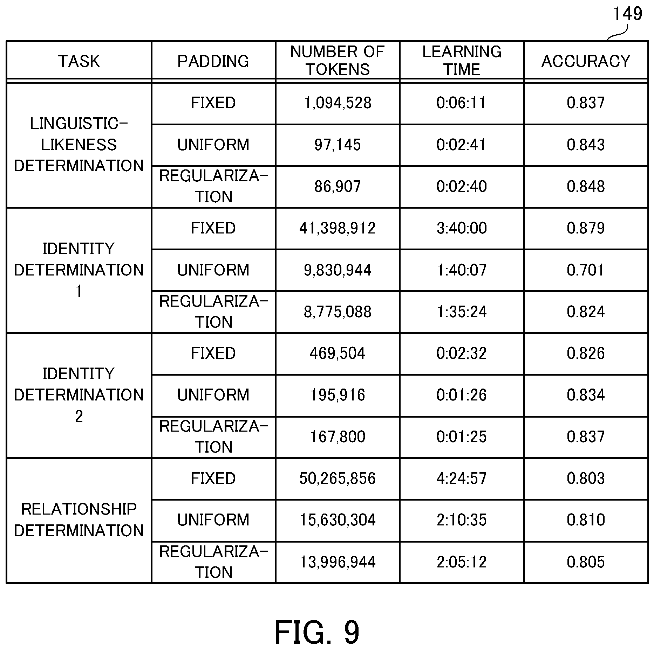

FIG. 9 illustrates an example of learning time and accuracy measurements.

A table 149 represents examples of measurements of the training time of machine learning and the accuracy of the natural language processing model, recorded for multiple natural language processing tasks and multiple padding methods. The table 149 associates natural language processing tasks, padding methods, total number of tokens in training data, learning time, and model accuracy. As a metric of the model accuracy, a correct answer rate (i.e., accuracy) is used.

A first natural language processing task is a linguistic-likeness determination task for determining whether a sentence is a linguistically meaningful and correct sentence. When building a natural language processing model that implements the first natural language processing task, the information processor 100 generates training data that maps each token string representing a sentence to a binary teacher label indicating whether the sentence is correct.

A second natural language processing task is an identity determination task for determining, from two question sentences, whether the two question sentences indicate substantially the same content. When building a natural language processing model that implements the second natural language processing task, the information processor 100 generates training data that maps each token string representing two sentences to a binary teacher label indicating whether the two sentences are identical.

A third natural language processing task is an identity determination task for determining, from two sentences, whether the two sentences provide substantially the same explanation. When building a natural language processing model that implements the third natural language processing task, the information processor 100 generates training data that maps each token string representing two sentences to a binary teacher label indicating whether the two sentences are identical.

A fourth natural language processing task is a relationship determination task for determining, from two sentences, an implication relation between the two sentences. There are three classes of implication relation: implicational, contradicted, and neutral. When building a natural language processing model that implements the fourth natural language processing task, the information processor 100 generates training data that maps each token string representing two sentences to a teacher label indicating which of the three classes of implication relation the two sentences have. Note that the information processor 100 is able to generate training data for these four natural language processing tasks using well-known data sets for natural language processing.

As depicted in the table 149, compared to the fixed padding and the uniform padding, the uniform padding with regularization reduces the total number of tokens in a set of mini-batches. In addition, the uniform padding with regularization reduces the learning time of machine learning compared to the fixed padding and the uniform padding. Further, the uniform padding with regularization achieves the same level of model accuracy as the fixed padding and the uniform padding. This is because, even if unwanted characters and pads to be removed or reduced by regularization are included in mini-batches, they would be given very small attention weights under optimized parameter values and, thus, contribute little to model accuracy.

Next described are functions and processing procedures of the information processor 100.

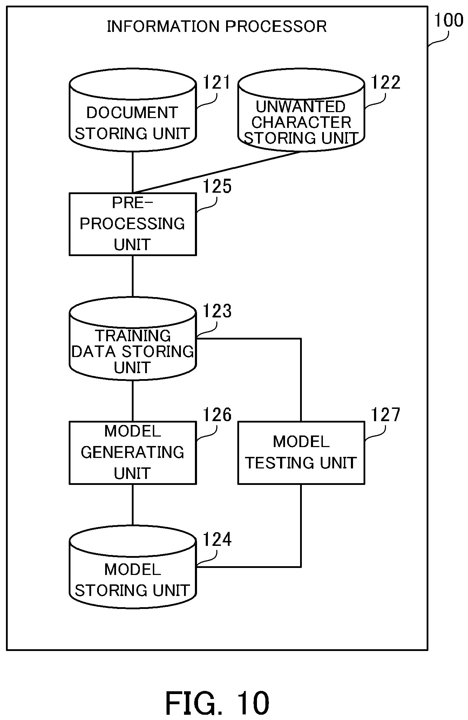

FIG. 10 is a block diagram illustrating an example of functions of the information processor.

The information processor 100 includes a document storing unit 121, an unwanted character storing unit 122, a training data storing unit 123, and a model storing unit 124. These storing units are implemented using, for example, the RAM 102 or the HDD 103. The information processor 100 also includes a preprocessing unit 125, a model generating unit 126, and a model testing unit 127. These processing units are implemented using, for example, the CPU 101 or the GPU 104 and programs.

The document storing unit 121 stores a document including multiple sentences written in natural language. The sentences included in the document are assigned teacher labels according to natural language processing tasks. The unwanted character storing unit 122 stores the unwanted character table 145 that defines unwanted characters.

The training data storing unit 123 stores training data generated from the document. The training data includes multiple mini-batches. Each mini-batch includes multiple token strings each associated with a teacher label. The training data storing unit 123 also stores test data used to measure the accuracy of a natural language processing model. The test data includes multiple token strings each associated with a teacher label. The model storing unit 124 stores a natural language processing model whose parameter values are optimized by machine learning.

The preprocessing unit 125 performs preprocessing on the document stored in the document storing unit 121 to generate training data and test data, and stores the training data and the test data in the training data storing unit 123. The preprocessing includes regularization to remove unwanted characters, tokenization, sorting of token strings, grouping, and padding. Note that the test data may be one or more mini-batches generated by a common method used for the training data. That is, the information processor 100 may generate multiple mini-batches and use some mini-batches as training data and others as test data.

The model generating unit 126 uses the training data stored in the training data storing unit 123 to optimize parameter values of the natural language processing model illustrated in FIG. 7. The model generating unit 126 performs iterations of generating an input tensor from one mini-batch, calculating the error between the output of the natural language processing model and the teacher label, and updating the parameter values to minimize the error. The model generating unit 126 stores the generated natural language processing model in the model storing unit 124. The model generating unit 126 may display the natural language processing model on the display device 111 or transmit it to a different information processor.

The model testing unit 127 measures the accuracy of the natural language processing model stored in the model storing unit 124, using the test data stored in the training data storing unit 123. The model testing unit 127 generates an input tensor from the test data and calculates the error between the output of the natural language processing model and the teacher label. The model testing unit 127 may store the measured accuracy, display it on the display device 111, or transmit it to a different information processor. In addition, the model testing unit 127 may store the estimation results of the natural language processing model, display them on the display device 111, or transmit them to a different information processor.

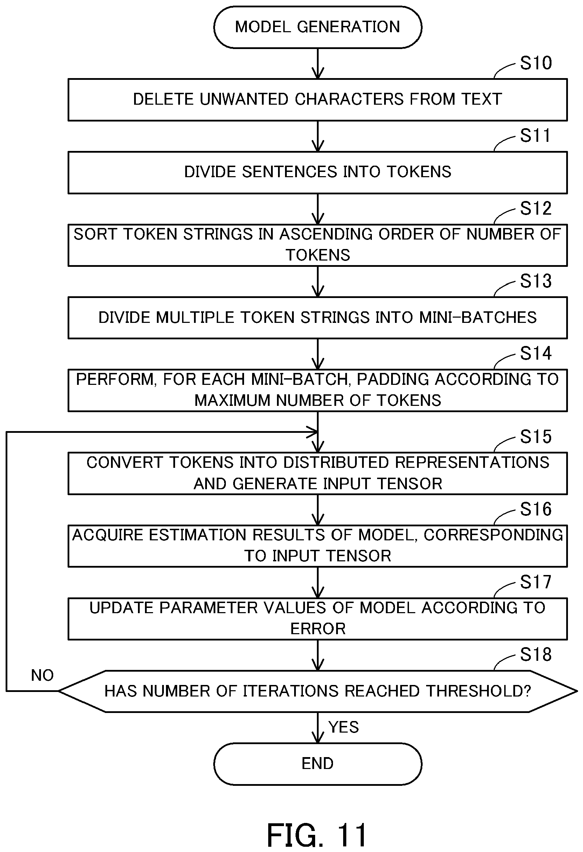

FIG. 11 is a flowchart illustrating an example of a model generation procedure.

(Step S10) The preprocessing unit 125 deletes predetermined specific types of characters as unwanted characters from text including multiple sentences. The unwanted characters include punctuation marks, non-letter characters, and markup tags defined in the unwanted character table 145.

(Step S11) The preprocessing unit 125 divides the sentences into tokens each representing a word or subword. As a result, multiple token strings are generated. Each token string represents one or two sentences, depending on a natural language processing task to be implemented.

(Step S12) The preprocessing unit 125 sorts the multiple token strings in ascending order of the number of tokens.

(Step S13) The preprocessing unit 125 divides the sorted multiple token strings by the mini-batch size to thereby create multiple mini-batches.

(Step S14) The preprocessing unit 125 determines, for each mini-batch, the maximum number of tokens in two or more token strings included in the mini-batch. The preprocessing unit 125 performs padding to add pads, each representing a dummy token, to the ends of token strings shorter than the maximum number of tokens so that the number of tokens in each token string matches the maximum number of tokens.

(Step S15) The model generating unit 126 selects one mini-batch. The model generating unit 126 assigns, to each token, a segment identifier that distinguishes the sentence to which the token belongs and a position identifier that indicates the position of the token in the token string. The model generating unit 126 converts the token IDs, the segment identifiers, and the position identifiers into distributed representations and generates an input tensor containing feature vectors corresponding to the individual tokens included in the mini-batch.

(Step S16) The model generating unit 126 acquires estimation results for the generated input tensor by running the natural language processing model based on the current parameter values of the natural language processing model.

(Step S17) The model generating unit 126 calculates the error between the estimation results and the teacher label, and updates the parameter values of the natural language processing model to minimize the error.

(Step S18) The model generating unit 126 determines whether the number of iterations of steps S15 to S17 has reached a threshold. When the number of iterations has reached the threshold, the model generating unit 126 outputs the trained natural language processing model, and the model generation process ends. If the number of iterations has not reached the threshold, the process returns to step S15.

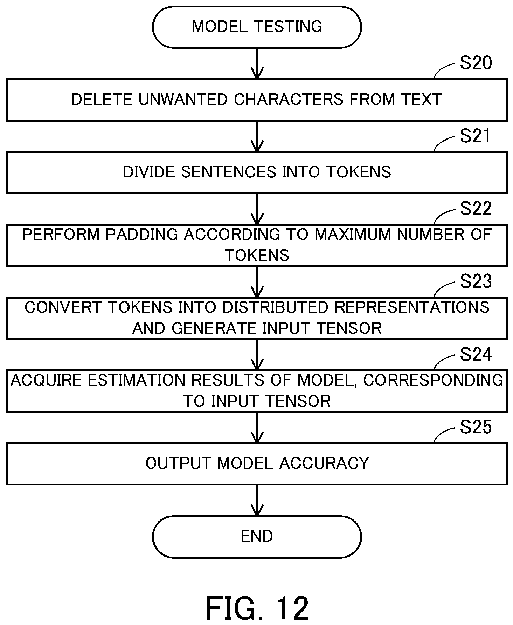

FIG. 12 is a flowchart illustrating an example of a model testing procedure.

(Step S20) The preprocessing unit 125 deletes predetermined specific types of characters as unwanted characters from text including multiple sentences. The unwanted characters include punctuation marks, non-letter characters, and markup tags defined in the unwanted character table 145.

(Step S21) The preprocessing unit 125 divides the sentences into tokens each representing a word or subword. As a result, multiple token strings are generated. Each token string represents one or two sentences, depending on a natural language processing task to be implemented.

(Step S22) The preprocessing unit 125 determines the maximum number of tokens amongst the multiple token strings. The preprocessing unit 125 performs padding to add pads, each representing a dummy token, to the ends of token strings shorter than the maximum number of tokens so that the number of tokens in each token string matches the maximum number of tokens. Note that the test data for model testing may be generated together with the training data used for model generation, or some of the multiple mini-batches generated in steps S10 to S14 above may be utilized as the test data for model testing.

(Step S23) The model testing unit 127 assigns, to each token, a segment identifier that distinguishes the sentence to which the token belongs and a position identifier that indicates the position of the token in the token string. The model generating unit 126 converts the token IDs, the segment identifiers, and the position identifiers into distributed representations and generates an input tensor containing feature vectors corresponding to the individual tokens.

(Step S24) The model testing unit 127 acquires estimation results for the generated input tensor by using the natural language processing model generated by machine learning.

(Step S25) The model testing unit 127 measures the accuracy of the natural language processing model by calculating the error between the estimation results and the teacher label. The model testing unit 127 outputs the measured model accuracy. The model testing unit 127 may output the estimation results of the natural language processing model. Note that when the natural language processing model is put into practice, a single token string is generated through the regularization of step S20 and the tokenization of step S21 and then input to the natural language processing model to thereby obtain estimation results.

As has been described above, the information processor 100 according to the second embodiment generates, from text, multiple mini-batches each containing two or more token strings, and performs iterations of updating the parameter values of the natural language processing model once for each mini-batch. In generating the mini-batches, the information processor 100 sorts multiple token strings in ascending order of the number of tokens, divides them into mini-batches, and performs uniform padding to equalize the number of tokens within each mini-batch. This reduces the number of pads included in each mini-batch.

The information processor 100 also performs regularization to remove unwanted characters, such as punctuation marks, non-letter characters, and markup tags, before uniform padding. This shortens token strings and reduces the data size of each mini-batch. In addition, when unwanted characters are deleted from a token string, the number of pads added to other token strings in the same mini-batch may decrease, and useless pads are therefore reduced from the after-padded mini-batch. In addition, the regularization reduces the risk of letting some token strings become significantly long due to inclusion of unwanted characters, which in turn reduces the risk of generating mini-batches containing a great number of pads. Therefore, the sizes of tensors handled inside the natural language processing model in each iteration are reduced, which lightens the load of processes, such as error calculation and parameter calculation, during machine learning. As a result, the learning time of machine learning is shortened.

Also, the unwanted characters and pads mentioned above are often of low importance for natural language processing tasks. Attention mechanisms included in natural language processing models often compute very small attention weights for those unwanted characters and pads under optimized parameter values. Hence, the unwanted characters and pads have a small contribution to the estimation results of the natural language processing models, and therefore deletion of these has little effect on the model accuracy.

According to one aspect, the learning time of the natural language processing models is reduced.

## Claims

1. A computer program that causes a computer to execute a process comprising:
deleting specific types of characters from each of a plurality of sentences and generating a plurality of word strings (15-1 to 15-4) which does not include the specific types of characters and corresponds to the plurality of sentences;
dividing the plurality of word strings into a plurality of groups (16-1 and 16-2), each of which includes two or more word strings;
performing, for each of the plurality of groups, padding to equalize a number of words among the two or more word strings based on a maximum number of words in the two or more word strings; and
updating, using each of the plurality of padded groups, parameter values included in a natural language processing model (14) that calculates an estimate value from a word string input thereto.

2. The computer program according to claim 1, wherein:
the dividing of the plurality of word strings includes sorting the plurality of word strings based on the number of words and dividing the plurality of sorted word strings (147) by a certain number of word strings.

3. The computer program according to claim 1, wherein:
the specific types of characters (145) include punctuation marks and non-letter characters.

4. The computer program according to claim 1, wherein:
the updating of the parameter values includes generating, for each of the plurality of groups, a feature matrix (139) whose size corresponds to the number of words equalized by the padding, and calculating the estimate value by applying the parameter values to the feature matrix.

5. A learning method executed by a computer, the learning method comprising:
deleting specific types of characters from each of a plurality of sentences and generating a plurality of word strings (15-1 to 15-4) which does not include the specific types of characters and corresponds to the plurality of sentences;
dividing the plurality of word strings into a plurality of groups (16-1 and 16-2), each of which includes two or more word strings;
performing, for each of the plurality of groups, padding to equalize a number of words among the two or more word strings based on a maximum number of words in the two or more word strings; and
updating, using each of the plurality of padded groups, parameter values included in a natural language processing model (14) that calculates an estimate value from a word string input thereto.

6. An information processing apparatus comprising:
memory means (11) for storing a document (13) containing a plurality of sentences; and
processing means (12) for:
deleting specific types of characters from each of the plurality of sentences and generating a plurality of word strings (15-1 to 15-4) which does not include the specific types of characters and corresponds to the plurality of sentences,
dividing the plurality of word strings into a plurality of groups (16-1 and 16-2), each of which includes two or more word strings,
performing, for each of the plurality of groups, padding to equalize a number of words among the two or more word strings based on a maximum number of words in the two or more word strings, and
updating, using each of the plurality of padded groups, parameter values included in a natural language processing model (14) that calculates an estimate value from a word string input thereto.
